(19) Europäisches Patentamt
European Patent Office
Office européen des brevets

(11) EP 1 268 576 B1

(12) **EUROPEAN PATENT SPECIFICATION**

(45) Date of publication and mention of the grant of the patent:
**08.03.2006 Bulletin 2006/10**

(21) Application number: **01927822.5**

(22) Date of filing: **28.03.2001**

(51) Int Cl.:
***C08F 10/02*** *(2006.01)* ***B65D 1/00*** *(2006.01)*

(86) International application number:
**PCT/EP2001/003525**

(87) International publication number:
**WO 2001/072856 (04.10.2001 Gazette 2001/40)**

# (54) METALLOCENE-PRODUCED POLYETHYLENE FOR GLOSSY PLASTIC CONTAINERS

METALLOCEN-POLYETHYLEN FÜR GLÄNZENDE PLASTIKBEHÄLTER

POLYETHYLENE METALLOCENIQUE POUR RECIPIENTS EN PLASTIQUE BRILLANTS

(84) Designated Contracting States:
**AT BE CH CY DE DK ES FI FR GB GR IE IT LI LU MC NL PT SE TR**

(30) Priority: **30.03.2000 EP 00201154**

(43) Date of publication of application:
**02.01.2003 Bulletin 2003/01**

(60) Divisional application:
**05105335.3 / 1 593 696**

(73) Proprietor: **TOTAL PETROCHEMICALS RESEARCH FELUY**
**7181 Seneffe (Feluy) (BE)**

(72) Inventor: **MAZIERS, Eric**
**B-7180 Ecaussines (BE)**

(74) Representative: **Roufosse, Micheline C.**
**Total Petrochemicals Research Feluy**
**Zone Industrielle C**
**7181 Seneffe (Feluy) (BE)**

(56) References cited:
**EP-A- 0 756 931**
**WO-A-00/40625**
**WO-A-95/21743**
**WO-A-96/19527**
**WO-A-97/02294**
**WO-A-98/32601**
**WO-A-99/10430**
**WO-A-99/26783**
**US-A- 5 629 253**

- **PATENT ABSTRACTS OF JAPAN vol. 1998, no. 01, 30 January 1998 (1998-01-30) & JP 09 235312 A (MITSUI PETROCHEM IND LTD), 9 September 1997 (1997-09-09)**
- **DATABASE WPI Week 200033, 9 May 2000 (2000-05-09) Derwent Publications Ltd., London, GB; AN 2000-382163 XP002145176 & JP 2000 129044 A (ASAHI KASEI KOGYO)**
- **DATABASE WPI Week 200033, 9 May 2000 (2000-05-09) Derwent Publications Ltd., London, GB; AN 2000-382164 XP002145177 & JP 2000 129045 A (ASAHI KASEI KOGYO)**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 268 576 B1

## Description

This invention is related to plastic containers having a glossy outer surface and in particular to the production high gloss bottles formed of polyethylene.

Several methods have been sought to produce high gloss bottles presenting good processability and good mechanical properties but all the blends and techniques used so far present various disadvantages.

High gloss high density polyethylene (HDPE) has been used: it is characterised by a very narrow molecular weight distribution that is typically inferior to 8. The molecular weight distribution can be completely defined by means of a curve obtained by gel permeation chromatography. Generally, the molecular weight distribution (MWD) is more simply defined by a parameter, known as the dispersion index D, which is the ratio between the average molecular weight by weight (Mw) and the average molecular weight by number (Mn). The dispersion index constitutes a measure of the width of the molecular weight distribution. It is known that a resin of narrow molecular weight distribution Will produce plastic containers of very high gloss but simultaneously, that such resin will be very difficult to process and will be characterised by very poor mechanical properties. It has also been observed that said resins have poor mechanical properties, particularly, a very low environmental stress crack resistance (Modem Plastic Intemational, August 1993, p. 45).

The coextrusion of high density polyethylene (HDPE) with a thin external layer of polyamide has been used to produce bottles of very high gloss but that method suffers the major drawback of necessitating an adhesive layer between the HDPE and the polyamide layers.

The coextrusion of high density polyethylene and an external layer of low density polyethylene leads to bottles with a fair gloss. These bottles however have an unpleasant greasy touch and offer a very poor resistance to scratching.

Metallocene-catalysed polyolefins have been used in transparent muhilayer films suitable for packaging, for example in EP-A-756,931, WO-98-32601, WO-99-10430, WO-95-21743, WO-97-02294. None of these prior art documents has addressed the problem of this invention: the production of plastic container having a glossy outer surface.

In another method, disclosed in co-pending patent application, high gloss plastic containers comprise an intemal layer including a polyolefin and an external layer including a styrenic component containing from 40 to 85 wt% of styrene, based on the weight of the external layer.

There is thus a need for a method for efficiently producing plastic containers of very high gloss as well as good processability and mechanical properties.

An aim of the present invention is to produce plastic containers that offer simultaneously the desired glossy appearance, a good resistance to scratching and very low swell.

It is also an aim of the present invention to obtain glossy plastic containers with good processability and -good mechanical properties.

It is another aim of the present invention to produce a resin that can be utilised in coextrusion.

The present invention provides single layer or multi-layer plastic bottles, for which the external layer consists essentially of a metallocene-produced polyethylene having a density of from 0.930 to 0.966 g/cm$^3$ and a melt index M12 of from 0.5 to 2.5 g/10min.

In this specification, the density of the polyethylene is measured at 23 °C using the procedures of ASTM D 1505.

The melt index M12 is measured using the procedures of ASTM D 1238 at 190°C using a load of 2.16 kg. The high load melt index HLMI is measured using the procedures of ASTM D 1238 at 190 °C using a load of 21.6 kg.

When muiti-tayer plastic bottles are produced, the external layer is prepared with a metallocene-produced polyethylene resin, the inner layer(s) is(are) prepared with any one of the known catalysts, such as a chromium or a Ziegler-Natta or a metallocene catalyst, said metallocene catalyst being either the same as or different from the metallocene catalyst used to prepare the external layer.

A number of different catalyst systems have been disclosed for the manufacture of polyethylene, in particular medium-density polyethylene (MDPE) and high-density polyethylene (HDPE) suitable for blow moulding. It is known in the art that the physical properties, in particular the mechanical properties, of a polyethylene product vary depending on what catalytic system was employed to make the polyethylene. This is because different catalyst systems tend to yield different molecular weight distributions in the polyethylene produced

It is known in the art to use chromium-based catalysts to polymerise HDPE and in particular to produce high-.density polyethylene having high resistance to environmental stress cracking. For example, EP-A-0,291,824, EP-A-0,591,968 and US-A-5,310,834 each disclose mixed catalyst compositions, incorporating chromium-based catalysts, for the polymerisation of polyethylene.

Alternatively, the HDPE can be produced using a conventional Ziegler-Natta catalyst or a supported Ziegler-Natta catalyst comprising metallocene sites such as described in EP-A-0,585,512.

The HDPE can further be polymerised with a metallocene catalyst capable of producing a mono- or bi- or multimodal distribution, either in a two stap process such as described for example in EP-A-0,881,237, or as a dual or multiple site catalyst in a single reactor such as described for example in EP-A-0,619,325. Any metallocene catalyst

known in the art can be used in the present invention. It is represented by the general formula:

I. $(Cp)_m MR_n X_q$

wherein Cp is a cyclopentadienyl ring, M is a group 4b, 5b or 6b transition metal, R is a hydrocarbyl group or hydrocarboxy having from 1 to 20 carbon atoms, X is a halogen, and m-1-3, n=0-3, q=0-3 and the sum m+n+q is equal to the oxidation state of the metal.

II. $(C_5R'_k)_g R''_5 (C_5R'_k) MQ_{3-9}$

III. $R''_s (C_5R'_k)_2 MQ'$

wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5R'_k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

The preferred metallocenes used in the present invention are ethylene bis-(tetrahydroindenyl) zirconium dichloride and ethylene bis-(indenyl) zirconium dichloride as disclosed for example in WO 96/35729.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

An active site must be created by adding a cocatalyst having an ionising action.

Preferably, alumoxane is used as cocatalyst during the polymerization procedure, and any alumoxane known in the art is suitable.

The preferred alumoxanes comprise oligomeric linear and/or cyclic alkyl alumoxanes represented by the formula :

(IV) 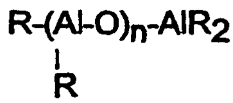

for oligomeric, linear alumoxanes and

(V) 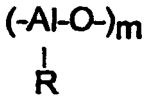

for oligomeric, cyclic alumoxanes,
wherein n is 1-40, preferably 10-20, m is 3-40, preferably 3-20 and R is a $C_1$-$C_8$ alkyl group and preferably methyl. Methylatumoxane is preferably used.

When alumoxane is not used as a cocatalyst, one or more aluminiumalkyl represented by the formula $AlR_x$ are used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

The metallocene catalyst utilised to produce a polyethylene, as required for preparing the high gloss plastic containers of the present invention, can be used in gas, solution or slurry polymerisation- Preferably, the polymerization process is conducted under slurry phase polymerization conditions. The polymerisation temperature ranges from 20 to 125°C, preferably from 60 to 95°C and the pressure ranges from 0.1 to 5.6 Mpa, preferably from 2 to 4 Mpa, for a time ranging from 10 minutes to 4 hours, preferably from 1 and 2.5 hours).

It is preferred that the polymerization reaction be run in a diluent at a temperature at which the polymer remains as a suspended solid in the diluent

A continuous loop reactor is preferably used for conducting the polymerisation.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer which can be used include 1-olefins butene, hexene, octene, 4-methyl-pentene, the most preferred being hexene.

The densities of the polyethylenes required for preparing the plastic containers of the present invention range from 0.930 g/cm$^3$ to 0.966 g/cm$^3$.

The melt index of polyethylene is regulated by the amount of hydrogen injected into the reactor. The melt indexes useful in the present invention range from 0.5 g/10' to 2.5 g/10'.

The polyethylene resin used in the present invention can be prepared with either a single site metallocene catalyst or with a multiple site metallocene catalyst and it has therefore either a monomodal or a bimodal molecular weight distribution. The molecular weight distribution is of from 2 to 20, preferably, of from 2 to 7 and more preferably of from 2 to 5.

The polyethylene resins produced in accordance with the above-described processes have physical properties making them particularly suitable for use as blow moulding grade polyethylenes. In addition, it has surprisingly been observed that they have good processability even when their molecular weight distribution is narrow.

The polyethylene resins of the present invention are used preferably for producing bottles of a capacity ranging from 0.005 to 5 1. They are more preferably used for producing food packaging, particularly milk bottles and juice bottles, cosmetic packaging and household packaging such as detergent packaging.

The blow moulding machine, incorporating a coextrusion die for extruding a parison to be blow moulded, can be any one of the machines generally used for blow moulding. The following have been used for processing the polyethylene:

- a Battenfeld Fisher VK1-4 available from Battenfeld : this is a continuous extrusion or co-extrusion blow moulding machine with up to 6 extruders for the production of polyethylene bottles of 0.5 litre capacity, the bottles being either single layer or multi-layer with up to 6 layers;
- a high productivity wheel configuration machine with 6 cavities for continuous extrusion.

The plastic bottles of the present invention are characterised by a very high gloss, as measured using the ASTM D 2457-90 test, a low haze as measured by ASTM D 1003-92, a very low swell and a outstanding resistance to drop.

The swell is measured with the Gottfert 2002 capillary rheometer: it measures the diameter of the extruded product for different shear velocities. The capillary selection corresponds to a die having an effective length of 10 mm, a diameter of 2 mm and an aperture of 180 °. The temperature is 210 °C. Shear velocities range from 7 to 725 sec$^{-1}$, selected in decreasing order in order to reduce the time spent in the cylinder; 7 velocities are usually tested. When the extruded product has a length of about 7cm, it is cut, after the pressure has been stabilised and the next velocity is selected. The extruded product (sample) is allowed to cool down in a rectilinear position.

The diameter of the extruded product is then measured with an accuracy of 0.01mm using a vernier, at 2.5 cm ($d_{2.5}$) and at 5 cm ($d_5$) from one end of the sample, making at each position $d_{2.5}$ and $d_5$ two measurements separated by an angle of 90°.

The diameter do at the one end of the sample selected for the test is extrapolated:

$$d_0 = d_{2.5} + (d_{2.5} - d_5)$$

The swell G is determined as

$$G = 100 \times (d_0 - d_f)/d_f$$

wherein $d_f$ is the die diameter.

The test is carried out only on the samples that are free of melt fracture.

The swell value is measured for each of the selected shear velocities and a graph representing the swell as a function of shear velocity can be obtained.

The drop resistance test is performed on one-litre bottles prepared in accordance with the present invention.

The drop resistance is measured using the following procedure:

A. Preparation of the equipment and bottles:

- the die and pin of the blow moulding equipment was cleaned on the day of production of the bottles;
- the bottles had a fairly homogeneous thickness;
- the net weight of bottles was 0.8 kg
- the empty bottles were stored at room temperature for about 20 hrs;
- the bottles were then filled with fluid, closed and brought to the desired conditioning as follows: 1) room temperature, water, 24 +- 3 hrs;

    2) -18 °C, water + anti-freeze, 24 +- 3 hrs;

B. A test run on a sample of 20 bottles included the following steps:

- definition of the zero height;
- selection of a starting height for the drop test;
- selection of a homogeneous step distance in order to ensure the use of at least three different heights for each bottle tested;
- rejection of the test if the impact was equivocal or if the cap was leaky;
- recording of the result in a grid shown in Table I;
- modification of the height by subtracting or adding one step distance depending upon whether the bottle broke or not;
- after 14 bottles were tested,

    1) the test was interrupted if the number of ruptures N=7;
    2) the test was continued until N=7, if N was <7;
    3) the test was continued until the number of non-ruptures is 7, if N was >7

- the calculation of the height of rupture $H_F$ was then given by the formula

$$H_F = H_0 + [\Delta H \ (A/N - 0.5)]$$

wherein

- $H_0$ is the minimum height,
- $\Delta H$ is the step distance,
- A is given by the product ($i * n_i$) wherein $n_i$ represents the number of ruptures at each height considering only the last 7 ruptures and i is an integer 0,1,2,.. indicating the number of steps above the minimum height $H_0$,
- N is the total number of ruptures.

In all the tests performed either on the resins of the present invention or on the comparative resins, the bottles were dropped from a maximum height of 6.5 m. No ruptures occurred ($n_t$ = 0 and $i * n_i$ = 0).

On the VK1-4 machine, it is possible to incorporate fluoroelastomer in the resin allowing for very low transformation temperatures of from 140 to 180 °C, preferably, around 160 °C. These temperatures are 30 to 40 °C lower than the transformation temperature normally used.

The typical weight of the container can be reduced by as much as 50 % if so desired.

It is also possible to produce coextruded plastic bottles wherein the external layer is a metaltooene-produced polyethylene and the intemal layer is a polyethylene produced by any conventional method. The external layer represents from 5 to 14 %, preferably about 10 %, of the total wall thickness.

On the wheel machine, the transformation temperatures are higher than on the VK1-4 machine, they range from 170 to 190 °C.

Additionally and quite surprisingly, the production rate is very high even though the melt index is low.

**Examples.**

Several polyethylene resins were prepared and tested for swell, gloss, haze and drop.

Resins R1 and R2.

They are monomodal polyethylene resins produced with a chromium catalyst. Resin R1, commercialised under the name Finathène SR572, was prepared with a titanated supported chromium catalyst and resin R2, commercialised under the name Finathène 5502 was prepared with a supported chromium catalyst

Resin R3.

This is a bimodal polyethylene resin that was prepared with a conventional Ziegler Natta catalyst.

Resin R4.

The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 94 wt% of the $SiO_2$.MAO produced in the first step with 6 wt% of ethylene bis-(tetrahydroindenyl) zirconium dichloride. The dry catalyst was slurried in isobutane and pre-contacted with triisobutylaluminium (TiBAl, 10 wt% in hexane) before injection in the reactor. The reaction was conducted in a 70 l capacity loop reactor during ? hour with the polymerisation temperature being maintained at 85 °C,. The operating conditions are summarised in Table I.

Resin R5.

The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 96 wt% of the $SiO_2$.MAO produced in the first step with 4 wt% of ethylene bis-(indenyl) zirconium. The dry catalyst was slurried in isobutane and pre-contacted with triisobutylaluminium (TiBAl, 10 wt% in hexane) before injection in the reactor. The reaction was conducted in a 70 l capacity loop reactor during ? hour with the polymerisation temperature being maintained at 90°C. The operating conditions are summarised in Table I.

**TABLE I.**

| Resin | Pol. Temp. °C | TiBAl $cm^3/h$ | iC4 kg/h | C2 Kg/h | C6 $cm^3/h$ | H2 Nl/h |
|---|---|---|---|---|---|---|
| R4 | 90 | 120 | 26 | 9 | 50 | 1.2 |
| R5 | 85 | 140 | 26 | 10 | 760 | 4.0 |

All these resins were prepared with hexene as comonomer.
The properties of these resins are summarised in Table II.

**TABLE II.**

| Resin | Density $g/cm^3$ | HLMI g/10' | MI2 g/10' | Mn | Mw | Mz | MWD |
|---|---|---|---|---|---|---|---|
| R4 | 0.934 | 25.1 | 0.96 | 34083 | 88134 | 167888 | 2.6 |
| R5 | 0.951 | 30.8 | 0.63 | 29037 | 134438 | 520624 | 4.6 |
| R1 | 0.955 | 20 | 0.18 | 16222 | 212677 | 2198839 | 13.1 |
| R2 | 0.953 | 17.65 | 0.19 | 19620 | 153558 | 1333100 | 7.8 |
| R3 | 0.959 | 18.7 | 0.19 | 12100 | 214000 | 1528000 | 17.7 |

These five resins were extruded or coextruded with the VK-14 Battenfeld extruder or with the wheel configuration extruder under conditions summarised in Tables III and IV respectively. The die was 10 mm for all examples. The properties of the extruded articles so produced are also described in Tables III and IV.

**TABLE III.**

| Resin | Processing Temp. | Bottle weight | Int. gloss | Ext. gloss | Haze |
|---|---|---|---|---|---|
| | °C | g | % | % | % |
| R4 | 155 | 65 | 45 | 37 | 49 |
| R4 | 155 | 30 | 51 | 44 | 40 |
| R1 | 200 | 65 | 8.4 | 9.1 | 64 |

During processing, resin R4 showed very low swell and a transparent parison. The bottles obtained were very glossy and transparent as compared to those obtained with resin R1, R2 and R3.

**TABLE IV.**

| Resin | Process. Temp | Amper. | RPM[1] | Die gap | Product. rate | Bottle weight | Swell in diam. |
|---|---|---|---|---|---|---|---|
| | °C | A | | mm | Nb*/min | g | Mm |
| R1 | 215 | 53 | 34 | 2.05 | 26 | 45 | 50 |
| R2 | 190 | 53 | 34 | 2.05 | 28 | 41 | 47 |
| R3 | 170 | 45 | 32 | 2.05 | 40 | 31 | 41 |
| R4 | 205 | 45 | 30 | 2.05 | 40 | 28 | 38 |
| R5 | 215 | 48 | 43 | 2.05 | 44 | 22 | 34 |
| R4 | 190 | 55 | 56 | 2.71 | 40 | 39 | 41 |

RPM[1] is the number of rotations per minute.
Nb*/min is the number of bottles produced per minute
All the bottles produced from resins R4 and R5 had a very high gloss and it was observed that adjusting the equipment accordingly could have increased the rate of production.

**Claims**

1. A bottle comprising one or more layers wherein the external layer is prepared essentially from a polyethylene resin produced with an ethylene-bisindenyl or an ethylene-bistetrahydroindenyl zirconium dichloride metallocene catalyst component, and wherein said external layer has a gloss of at least 40.

2. The bottle according to claim 1, wherein the polyethylene resin has a density of from 0.930 to 0.966 g/cm$^3$ and a melt index MI2 of from 0.5 to 2.5 g/10min.

3. The bottle according to claim 1 or claim 2 wherein the polyethylene resin has a molecular weight distribution of from 2 to 7.

4. The bottle according to any one of the preceding claims that is produced by blow moulding an extruded or coextruded parison.

5. The bottle according to any one of the preceding claims that is a single layer bottle.

6. The bottle according to any one of claims 1 to 4 that is a multi-layer bottle, each layer being the same or different.

7. Milk bottles according to any one of the preceding claims.

8. Cosmetic packaging according to any one of claims 1 to 6.

9. Household packaging according to any one of claims 1 to 6.

10. Use of a polyethylene resin produced with an ethylene bisindenyl or an ethylene bistetrahydroindenyl zirconium

dichloride metallocene catalyst component to prepare the external layer of bottles comprising one or more layers wherein said external layer has a gloss of at least 40.

**Patentansprüche**

1. Eine Flasche, die ein oder mehr Schichten umfasst, wobei die äußere Schicht im Wesentlichen aus einem Polyethylenharz hergestellt ist, das mit einer Ethylenbisindenyl- oder einer Ethylenbistetrahydroindenylzirkoniumdichlorid-Metallocenkatalysatorkomponente produziert ist, und wobei besagte äußere Schicht einen Glanz von zumindest 40 hat.

2. Die Flasche gemäß Anspruch 1, wobei das Polyethylenharz eine Dichte von 0,930 bis 0,966 g/cm$^3$ und einen Schmelzindex MI2 von 0,5 bis 2,5 g/10min hat.

3. Die Flasche gemäß Anspruch 1 oder Anspruch 2, wobei das Polyethylenharz eine Molmassenverteilung von 2 bis 7 hat.

4. Die Flasche gemäß einem der vorgenannten Ansprüche, die durch Blasformen eines extrudierten oder koextrudierten Vorformlings produziert ist.

5. Die Flasche gemäß einem der vorgenannten Ansprüche, die eine einlagige Flasche ist.

6. Die Flasche gemäß einem der Ansprüche 1 bis 4, die eine mehrlagige Flasche ist, wobei jede Schicht dieselbe oder unterschiedlich ist.

7. Milchflaschen gemäß einem der vorgenannten Ansprüche.

8. Kosmetikverpackungen gemäß einem der Ansprüche 1 bis 6.

9. Haushaltverpackungen gemäß einem der Ansprüche 1 bis 6.

10. Anwendung eines Polyethylenharzes, das mit einer Ethylenbisindenyl- oder einer Ethylenbistetrahydroindenylzirkoniumdichlorid-Metallocenkatalysatorkomponente produziert wurde, um die äußere Schicht von Flaschen, die ein oder mehr Schichten umfassen, herzustellen, wobei besagte äußere Schicht einen Glanz von zumindest 40 hat.

**Revendications**

1. Bouteille comprenant une ou plusieurs couches, la couche externe étant obtenue essentiellement à partir d'une résine de polyéthylène préparée avec un composant de catalyseur de métallocène du type du dichlorure d'éthylène-bisindényl zirconium ou du dichlorure d'éthylène-bistétrahydroindényl zirconium, et dans laquelle ladite couche externe possède un brillant d'au moins 40.

2. Bouteille selon la revendication 1, dans laquelle la résine de polyéthylène possède une densité de 0,930 à 0,966 g/cm$^3$ et un indice de fluidité à chaud MI2 de 0,5 à 2,5 g/10 min.

3. Bouteille selon la revendication 1 ou 2, dans laquelle la résine de polyéthylène possède une distribution du poids moléculaire de 2 à 7.

4. Bouteille selon l'une quelconque des revendications précédentes, que l'on obtient par moulage par extrusion-soufflage d'une paraison extrudée ou coextrudée.

5. Bouteille selon l'une quelconque des revendications précédentes, à savoir une bouteille comprenant une seule couche.

6. Bouteille selon l'une quelconque des revendications 1 à 4, à savoir une bouteille comprenant plusieurs couches, chaque couche étant identique ou différente.

**7.** Bouteille de lait selon l'une quelconque des revendications précédentes.

**8.** Conditionnement pour un produit cosmétique selon l'une quelconque des revendications 1 à 6.

**9.** Conditionnement pour un produit de ménage selon l'une quelconque des revendications 1 à 6.

**10.** Utilisation d'une résine de polyéthylène obtenue avec un composant de catalyseur de métallocène du type du dichlorure d'éthylène-bisindényl zirconium ou du dichlorure d'éthylène-bistétrahydroindényl zirconium pour préparer la couche externe de bouteilles comprenant une ou plusieurs couches, ladite couche externe possédant un brillant d'au moins 40.